# EUROPEAN PATENT APPLICATION

(11) **EP 4 765 344 A1**
(43) Date of publication of application: **24.06.2026**
(21) Application number: 25224567.5
(22) Date of filing: 17.12.2025
(51) Int. Cl.: H01M 10/658, B32B 3/04, B32B 3/14, B32B 37/12, H01M 50/291, H01M 50/293

(54) **PRODUCTION METHOD FOR BATTERY PACK ENCAPSULATED THERMAL INSULATION PADS**

(30) Priority: 18.12.2024 GB 202418592
(71) Applicant: Tecman Speciality Materials Ltd, Warwickshire CV31 1NB (GB)
(72) Inventor: PORTER, Kevin, Warwickshire CV31 1NB (GB)
(74) Representative: Keltie LLP

(57) **Abstract**

There is provided a method of making a plurality of anti-thermal propagation cell spacers for use in a multi-cell battery pack. The method comprises providing a web of base film extending in a longitudinal direction. The web of base film comprises a first side and a second side. The first side of the web of base film is covered with an adhesive layer. The method also comprises providing a first plurality of insulation pads. The first plurality of insulation pads comprise a top face, a base face, a front edge, a back edge, a left side, and a right side. The method further comprises attaching the base face of an insulation pad of the first plurality of insulation pads to the first side of the web of base film, such that a left base film strip and a right base film strip of the web of base film remain unattached to the insulation pad. The method further comprises folding the left base film strip over the left side and at least a portion of the top face of an insulation pad of the first plurality of insulation pads. The method also comprises folding the right base film strip over the right side and at least a portion of the top face of an insulation pad of the first plurality of insulation pads. The method further comprises providing a first web of lidding film extending in the longitudinal direction. The first web of lidding film comprises a first side and a second side. The first side of the first web of lidding film is covered with an adhesive layer. The method also comprises attaching the first side of the first web of lidding film to at least a portion of the top face of an insulation pad of the first plurality of insulation pads, wherein the first side of the first web of lidding film is also attached to at least a portion of the left base film strip and of the right base film strip.

## Description

### TECHNICAL FIELD

The present invention relates to a method of production of a thermal insulator for use in a battery pack.

### BACKGROUND

In recent years, the popularity of electric vehicles has increased considerably. A main advantage of electric vehicles over traditional internal combustion engine vehicles is that they use electrical energy and so do not need to burn hydrocarbon-containing fuels. Consequently, electric vehicles do not emit carbon dioxide while driving and so are viewed as more environmentally friendly.

Most electric vehicles comprise a sizeable battery pack with a plurality of chargeable lithium-ion batteries. Considerable time and effort goes towards designing this battery pack to be relatively small and lightweight, while providing a high energy storage capacity that allows the vehicle to be driven over large distances without requiring the batteries to be recharged. An important challenge in the design of battery packs for electric vehicles is to combine high density energy storage and quick charging with effective thermal management to avoid overheating of individual battery cells which can propagate to neighbouring battery cells and eventually lead to thermal runaway of larger parts of the battery pack.

Known solutions for avoiding such thermal propagation once a cell goes into thermal runaway include the use of thermally insulating material between adjacent battery cells. This thermally insulating material can be provided in the form of an anti-thermal propagation (ATP) pad or cell barrier as they are sometime referred to, which consists of insulation material encapsulated in a wrapping film to prevent the insulation shedding dust and/or fibres into the battery system. ATP pads can include adhesive tape for bonding the ATP pad to a battery cell during assembly of the battery pack.

Conventional methods of rapid encapsulation, such as flow wrapping, are unable to process the extremely dusty insulation materials nor are they able to create a tight encapsulation wrap which sits flush on all 4 sides of the product. All conventional encapsulation systems leave a hem at one or both ends and often down the centre. ATP pads have to be wrapped in such a way that the encapsulation film sits tight against all edges and faces of the insulation materials.

Manufacturing these ATP pads utilises two continuous layers of encapsulation material which are formed tightly around the insulation material. The insulation material is cut to size at an early stage in the process, or is pre-cut and loaded into the process. Manufacturing the ATP pads using automated assembly and folding is a costly exercise whether it is done in-house along with the final assembly, or by an external supplier. The encapsulation film has to be pre-cut and the material and film has to pass through a series of stations stopping at each one to have areas folded. In addition to the equipment required to assemble the final ATP pad, a large amount of machinery is required to produce these separate elements from raw and intermediate materials.

In addition to this, if the individual components are produced by an external supplier and purchased for assembly into the ATP pads, the supply chain is made more complex and therefore more susceptible to changes and disruptions. This can affect the cost and quality of the final ATP pads, and may impact assembly if one or more components are temporarily unavailable.

Due to the physical nature of the insulation material, it is impractical to pre-cut, pack, stock and transport the high volume of parts.

It is an aim of the present invention to address one or more disadvantages associated with the prior art.

### SUMMARY OF THE INVENTION

According to an aspect of the invention, there is provided a method of making a plurality of anti-thermal propagation cell spacers for use in a multi-cell battery pack. The method comprises providing a web of base film extending in a longitudinal direction. The web of base film comprises a first side and a second side. The first side of the web of base film is covered with an adhesive layer. The method also comprises providing a first plurality of insulation pads. The first plurality of insulation pads comprise a top face, a base face, a front edge, a back edge, a left side, and a right side. The method further comprises attaching the base face of an insulation pad of the first plurality of insulation pads to the first side of the web of base film, such that a left base film strip and a right base film strip of the web of base film remain unattached to the insulation pad. The method further comprises folding the left base film strip over the left side and at least a portion of the top face of an insulation pad of the first plurality of insulation pads. The method also comprises folding the right base film strip over the right side and at least a portion of the top face of an insulation pad of the first plurality of insulation pads. The method further comprises providing a first web of lidding film extending in the longitudinal direction. The first web of lidding film comprises a first side and a second side. The first side of the first web of lidding film is covered with an adhesive layer. The method also comprises attaching the first side of the first web of lidding film to at least a portion of the top face of an insulation pad of the first plurality of insulation pads, wherein the first side of the first web of lidding film is also attached to at least a portion of the left base film strip and of the right base film strip.

The insulation pads of the first plurality of insulation pads may be attached to the web of base film in series, such that consecutive insulation pads may be spaced apart along the longitudinal direction by a longitudinal spacing.

The method may further comprise attaching the first side of the first web of lidding film to the first side of the web of base film between consecutive insulation pads of the first plurality of insulation pads. The method may further comprise attaching the first side of the first web of lidding film to at least a portion of the front edge and at least a portion of the back edge of the insulation pad.

A left and right folding plow may respectively fold the left base film strip and the right base film strip over the insulation pad.

The method may further comprise cutting vertically through the web of base film and the first web of lidding film at a point substantially equidistant between consecutive insulation pads of the first plurality of insulation pads to define a front film flap and a back film flap. The method may further comprise folding the front film flap over the front edge and at least a portion of the top face of the insulation pad. The method may also comprise folding the back film flap over the back edge and at least a portion of the top face of the insulation pad.

The method may further comprise adjusting the alignment of the insulation pad prior to attaching the base face of the insulation pad to the first side of the web of base film. Adjusting the alignment of the insulation pad may comprise moving the insulation pad such that the front edge of the insulation pad is substantially perpendicular to the longitudinal direction. Adjusting the alignment of the insulation pad may also comprise moving the insulation pad such that the longitudinal spacing between the two consecutive insulation pads is substantially consistent, preferably with a variance of less than 1mm.

The method may further comprise determining, for the insulation pads, insulation pad misalignment information. The insulation pad misalignment information may comprise information regarding angular misalignment, parallel misalignment, and/or serial misalignment of the insulation pads.

The method may further comprise providing a second plurality of insulation pads comprising a top face, a base face, a front edge, a back edge, a left side, and a right side. The method may also comprise attaching the base face of an insulation pad of the second plurality of insulation pads to the first side of the web of base film, such that a left base film strip and a right base film strip of the web of base film remains unattached to the insulation pad. The insulation pads in the first plurality may be spaced apart from the insulation pads in the second plurality by a latitudinal spacing. The latitudinal spacing may be perpendicular to the longitudinal direction.

The method may further comprise dividing the web of base film in the longitudinal direction between the insulation pad of the first plurality of insulation pads and insulation pad of the second plurality of insulation pads. The method may also comprise folding the left base film strip over the left side and at least a portion of the top face of the insulation pad of the first plurality of insulation pads. The method may further comprise folding the right base film strip over the right side and at least a portion of the top face of the insulation pad of the second plurality of insulation pads. The method may also comprise providing a second web of lidding film extending in the longitudinal direction. The second web of lidding film may comprise a first side and a second side. The first side of the second web of lidding film may be covered with an adhesive layer. The method may further comprise attaching the first side of the second web of lidding film to at least a portion of the top face of the insulation pad of the second plurality of insulation pads, wherein the first side of the second web of lidding film may also be attached to at least a portion of the left base film strip and of the right base film strip of the insulation pad of the second plurality of insulation pads.

According to another aspect of the invention there is provided an anti-thermal propagation cell spacer as produced according to a method as described above.

### BRIEF DESCRIPTION OF THE DRAWINGS

Embodiments of the invention will now be described by way of example with reference to the accompanying drawings, in which:
Figure 1 shows an embodiment of an assembled encapsulated anti-thermal propagation (ATP) cell spacer according to the invention ;
Figure 2 shows an exploded view of the encapsulated ATP cell spacer of Figure 1;
Figure 3 shows an embodiment of a process for making an encapsulated ATP cell spacer according to the invention;
Figure 4 shows a perspective view of the process for making an encapsulated ATP cell spacer as shown in Figure 3;
Figure 5 shows an example of two streams of insulation pads and their respective spacings;
Figures 6a, 6b, and 6c show examples of alignment and misalignment between adjacent insulation pads;
Figure 7a shows the folding and application process of the first base film strip and the second base film strip to insulation pads;
Figure 7b shows a linked series of ATP cell spacers; and
Figure 7c shows the seal created by the lidding and base films between two consecutive insulation pads.

### DETAILED DESCRIPTION OF THE DRAWINGS

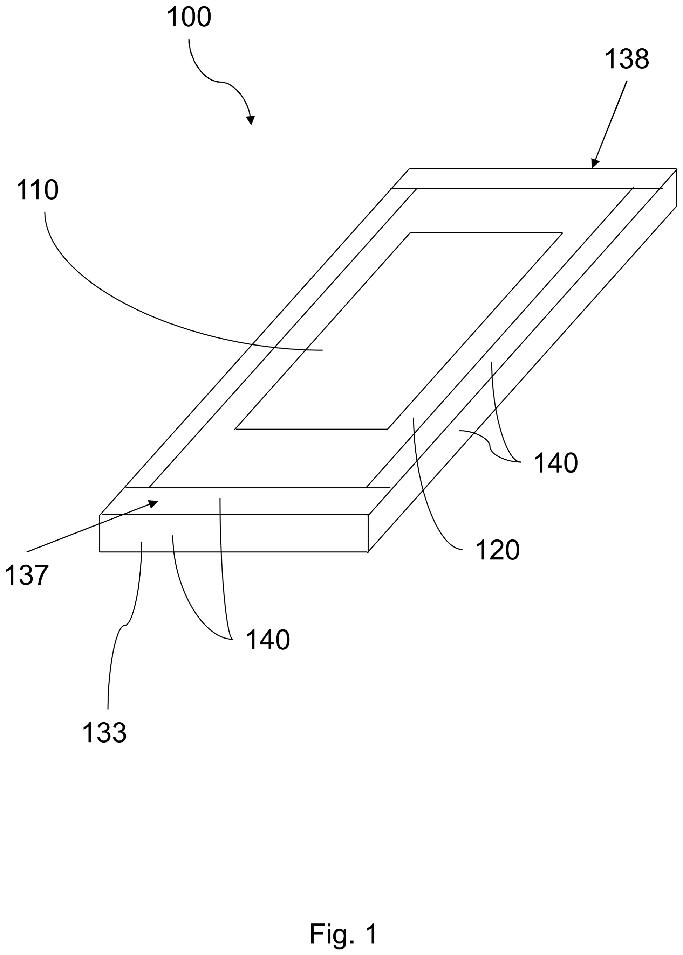

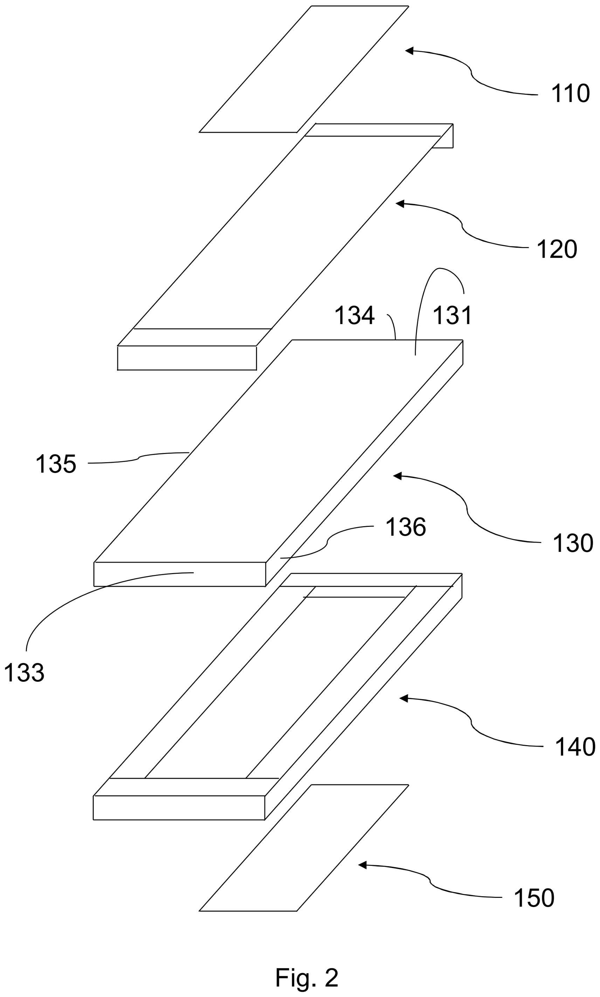

Figure 1 shows an embodiment of an assembled encapsulated anti-thermal propagation (ATP) cell spacer 100 according to the invention, and Figure 2 shows an exploded view of said ATP cell spacer 100. The ATP cell spacer 100 is configured to be sandwiched between two battery cells (not shown) in a multi-cell battery pack. This provides thermal insulation between battery cells and helps to prevent or delay thermal propagation. The ATP cell spacer 100 comprises a first adhesive patch 110, a first folded film 120, an insulation pad 130, a second folded film 140, and a second adhesive patch 150. The two films 120, 140 are folded over the insulation pad 130 in accordance with the process that is described in the following. It is to be noted that the Figures are schematic drawings and have not been drawn to scale.

The insulation pad 130 is in this example is made of a lightweight insulation material configured for preventing thermal propagation. The lightweight insulation material may, for example, be an aerogel, ceramic or silica gel fibre. Other suitable insulating materials may also be used. The insulation pad 130 may in other examples comprise multiple layers of material, with different layers performing different functions, for example the insulation pad 130 may comprise a layer of insulation material (e.g., aerogel) and a layer of material which imparts structural support to the ATP cell spacer 100. The insulation pad 130 has a first face 131 (also referred to as a top face 131), a second face 132 (also referred to as a base face 132), a first edge 133 (also referred to as a front edge 133), a second edge 134 (also referred to as a back edge 134), a first side 135 (also referred to as a left side 135), and a second side 136 (also referred to as a right side 136). The insulation pad is substantially in the shape of a right rectangular prism, and thus all of the top and base faces 131, 132, front and back edges 133, 134, and left and right sides 135, 136 each have a substantially rectangular shape. This shape aligns well with the shape of traditional battery cells so as to provide a maximum coverage of the battery cell with insulation material, however any other suitable shape for the insulation pad 130 may be used.

The insulation pad 130 is sandwiched between the first folded film 120 (also referred to as the top folded film 120) and the second folded film 140 (also referred to as the base folded film 140). The top and base folded films 120, 140 may, for example, comprise polyethylene, polyester or any other suitable polymers. The top folded film 120 comprises a first side and a second side, with the first side being covered in an adhesive layer. Similarly, the base folded film 140 comprises a first side and a second side, with the first side being covered in an adhesive layer.

As can be seen from Figures 1 and 2, the top folded film 120 and the base folded film 140 are folded over the insulation pad 130, primarily to create a seal around and therefore encapsulate the insulation pad 130, preventing the lightweight insulation material of the insulation pad 130 from shedding from an assembled ATP cell spacer 100. The adhesive covered first side of each of the top and base folded films 120, 140 are each in contact with at least a portion of the insulation pad 130. The folding process for the top folded film 120 and base folded film 140 will be explained in more detail below with respect to the manufacturing process.

In this embodiment, the first and second adhesive patches 110, 150 are made of double-sided tape and so each of a first and second side of each adhesive patch 110, 150 is coated in an adhesive layer. Alternatively, any suitable material with an adhesive layer on at least one side of each adhesive patch 110, 150 may be used. The first side of the top adhesive patch 110 is attached to the top of the encapsulated ATP cell spacer 100, and the first side of the bottom adhesive patch 150 is attached to the bottom of the encapsulated ATP cell spacer 100. In this embodiment, a liner (not pictured), for example comprising polyethylene terephthalate, is removably attached to the second side of each adhesive patch 110, 150 in order to protect the adhesive layer on the second side of each adhesive patch 110, 150. In this embodiment, the adhesive patches 120, 150 are rectangular.

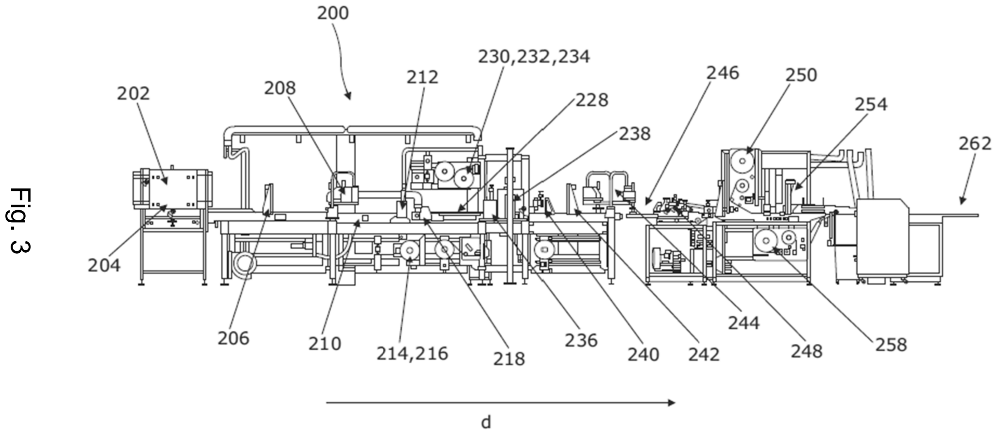

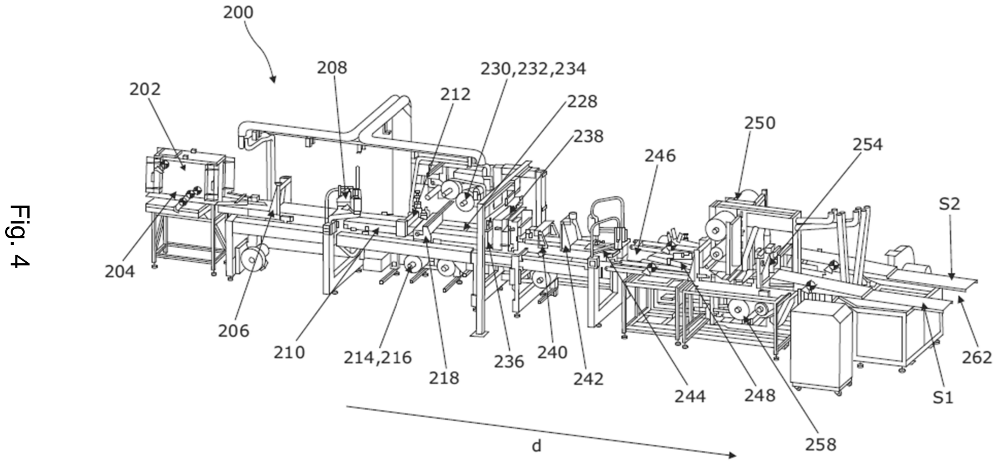

Figures 3 and 4 show an embodiment of a process according to the invention for making multiple anti-thermal propagation cell spacers 100, also referred to as an 'encapsulated ATP cell spacer manufacturing process', or 'manufacturing process'. As will be described, the manufacturing process is a continuous process which allows for many ATP cell spacers 100 to be created in series and linked together, before separation into individual ATP cell spacers 100. It is to be noted that the steps of the manufacturing process as described below can occur in any sensible order, for which the machinery shown in Figures 3 and 4 and described below can be rearranged accordingly. The machinery shown in Figures 3 and 4 is arranged in series in a substantially linear configuration, such that the components of the ATP cell spacers 100 are advanced through the manufacturing process in a substantially linear and longitudinal direction d. It will be recognised that in other embodiments, direction d may not be linear and so the manufacturing process may include changes in direction.

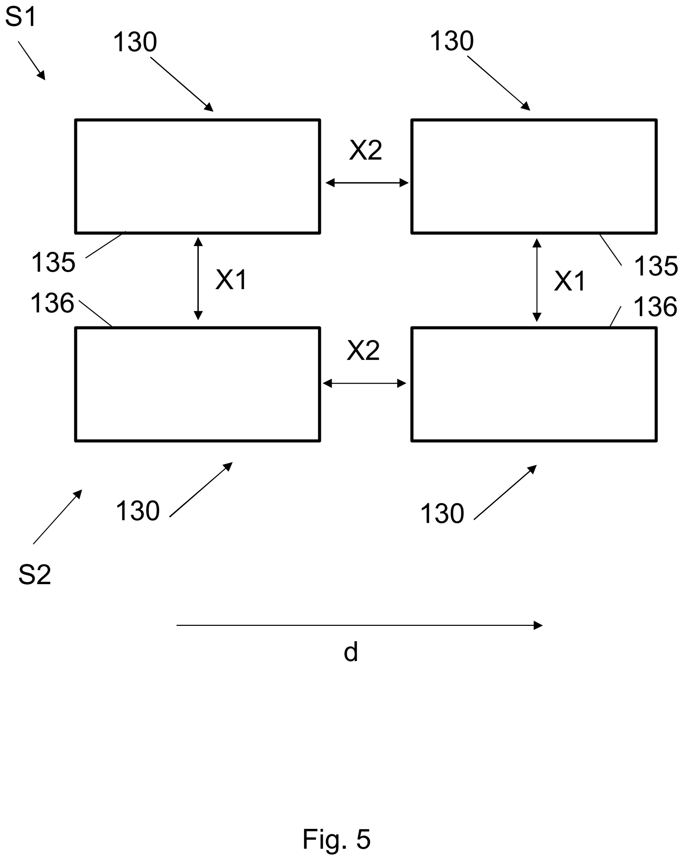

In this example, the insulation pads 130 are pre-cut to size, and an insulation pad loading unit 202 is configured to feed the insulation pads 130 onto a first moving conveyor 204. The insulation pads 130 may be fed onto the first moving conveyor 204 by a pick and place mechanism, or any other suitable mechanism and method. Alternatively, a continuous roll of insulation material (not shown) may be fed into the manufacturing process, and a cutting mechanism (not shown) may be configured to cut the roll of insulation material into individual insulation pads 130. The insulation pads 130 are fed lengthways (in the direction of travel d) onto the top surface of the first moving conveyor 204, leading with the front edge 133, and with the front edge 133 being substantially perpendicular to direction d. At this stage, the base face 132 of each insulation pad 130 is facing downwards and is in contact with the top surface of the first moving conveyor 204. The insulation pads 130 are fed onto the first moving conveyor 204 in two adjacent parallel streams, a first stream S1 of insulation pads 130 and a second stream S2 of insulation pads 130. An example of these two streams S1, S2 of insulation pads 130 and their respective spacings are shown in Figure 5. Here, the two streams S1, S2 of insulation pads 130 are spaced apart from each other by spacing X1 in a direction perpendicular to direction d, i.e. the two streams S1, S2 of insulation pads 130 are side-by-side as they are each advanced through the manufacturing process in direction d. Spacing X1 between each stream of insulation pads S1, S2 is substantially consistent, preferably with a variance of at most 0.5mm. In each stream of insulation pads S1, S2, the insulation pads 130 are arranged linearly in series along direction d, and spaced apart lengthwise along direction d by spacing X2. Spacing X2 between consecutive insulation pads 130 is substantially consistent, preferably with a variance of less than 1mm, more preferably with a variance of less than 0.5mm. A target measurement for each of X1 and X2 is set, for example 30mm for X1 and 25mm for X2. Consistent spacing between consecutive insulation pads 130 is important to allow for each ATP cell spacer 100 to have a large enough front film flap 137 and back film flap 138, thus allowing for each the insulation pad 130 to be fully encapsulated, as will be explained in more detail below.

The two streams S1, S2 of insulation pads 130 are then advanced through the manufacturing process by the first moving conveyor 204 to a first laser profiling unit 206. The first laser profiling unit 206 may comprise a conventional 2D or a 3D laser profile scanner, which is configured to detect each insulation pad 130, measure the dimensions of each insulation pad 130, and determine the position of the insulation pad 130, including the position and orientation of the insulation pad 130 relative to direction d. To accomplish this, the first laser profiling unit 206 is also therefore configured to determine the spatial coordinates (e.g. x, y coordinates) of each insulation pad 130, relative to a reference point.

The spatial coordinates of each insulation pad 130 may comprise a set of x, y coordinates which correspond to points spaced evenly around the perimeter of the top face 131 of each insulation pad 130, including the four corners of the top face 131. The spatial coordinates may also comprise an x, y coordinate which corresponds to the central point of the top face of each insulation pad 130.

The reference point may coincide with a fixed point, such as the position of the first laser profiling unit 206, i.e. a central point of the first laser profiling unit 206. Alternatively, the reference point may coincide with a point on the outer edge of the first moving conveyor 204, or any other appropriate point. The reference point may instead be an edge or corner of an insulation pad 130 which is adjacent to the insulation pad 130 of which the spatial coordinates are being determined.

The first laser profiling unit 206 may have two laser profile scanners, with one laser profile scanner configured to detect the insulation pads 130 of the first stream S1, and another laser profile scanner configured to detect the insulation pads 130 of the second stream S2. Alternatively, there may just be a single laser profile scanner that is configured to simultaneously or alternately monitor both streams S1, S2.

The first laser profiling unit 206 is therefore configured to create a 2D or 3D map of each insulation pad 130 and determine the spatial coordinates of each insulation pad 130 as each insulation pad 130 is advanced past the first laser profiling unit 206 by the first moving conveyor 204. The first laser profiling unit 206 is further configured to identify whether each insulation pad 130 is misaligned. Misalignment of an insulation pad 130 at this stage in the manufacturing process may, for example, occur when the insulation pad loading unit 202 feeds the insulation pads 130 onto the first moving conveyor 204.

An insulation pad 130 can have either an angular misalignment, a parallel misalignment, or a combined angular and parallel misalignment. The presence and extent of any possible misalignment of each insulation pad 130 is determined by the first laser profiling unit 206 comparing the spatial coordinates of each insulation pad 130 to the reference point.

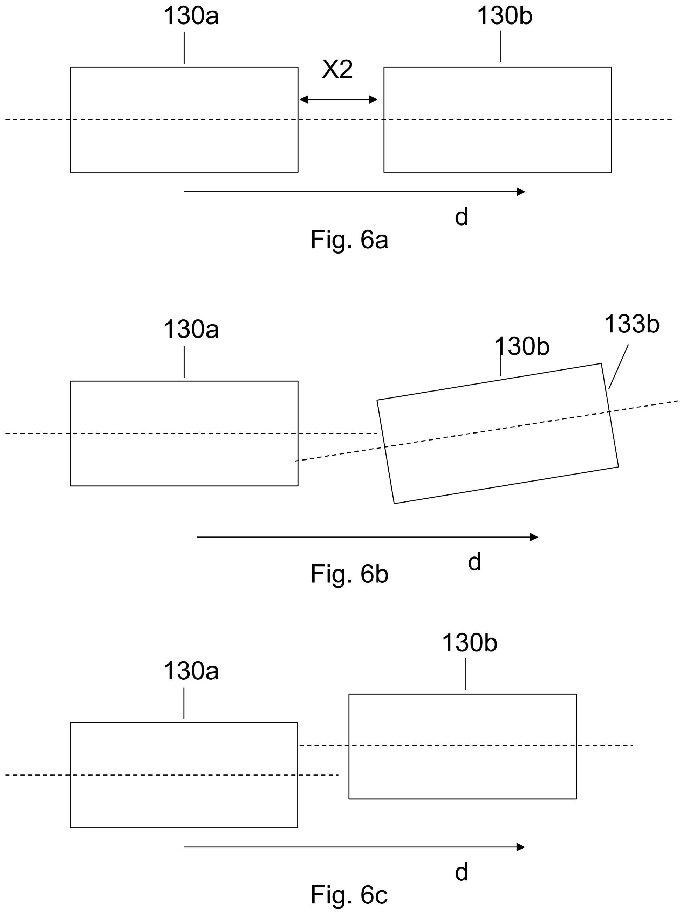

Figure 6a shows two insulation pads 130a, 130b in a single stream with spacing X2 and no misalignment of either pad, i.e. pads 130a and 130b are in the 'correct alignment'. Figure 6b shows an example of an insulation pad 130b which has angular misalignment, with respect to direction d. An angular misalignment of an insulation pad 130 may occur when the front edge 133 of the insulation pad 130 is not substantially perpendicular to direction d. Figure 6c shows an example of an insulation pad 130b which has both parallel misalignment and serial misalignment, with respect to another insulation pad 130a in the same series. A parallel misalignment on an insulation pad 130 may occur when the spacing between the insulation pad 130 (for example, in stream S1) and another insulation pad 130 in stream S2 does not equal the target value for spacing X1. A serial misalignment on an insulation pad 130 may occur when the spacing between two consecutive insulation pads 130 in the same stream does not equal the target value for spacing X2. A combined angular and parallel misalignment of an insulation pad 130 may occur when both angular misalignment and parallel misalignment of the insulation pad 130 occurs. The first laser profiling unit 206 is configured to identify both the presence and the extent of any such misalignment of each insulation pad 130, i.e. 'insulation pad misalignment information'.

The two streams S1, S2 of insulation pads 130 are then advanced through the manufacturing process by the first moving conveyor 204 to a first insulation pad alignment unit 208. The first insulation pad alignment unit 208 may comprise a conventional pick and place mechanism, such as a robotic arm or a cartesian robot, and is configured to correct the alignment of each insulation pad 130 if required. The first insulation pad alignment unit 208 is configured to transfer each insulation pad 130 from the first moving conveyor 204 to a first vacuum conveyor belt 210, while simultaneously correcting the alignment of each insulation pad 130, as will be explained in more detail below. The first insulation pad alignment unit 208 may have two or four pick and place mechanisms, with one or two pick and place mechanisms configured to transfer and correct the alignment of the insulation pads 130 of the first stream S1, and one or two pick and place mechanisms configured to correct the alignment of the insulation pads 130 of the second stream S2. Any other suitable alternative mechanism which can transfer and correct the alignment of each insulation pad 130 if required may be used. The first laser profiling unit 206 is therefore configured to communicate with the first insulation pad alignment unit(s) 208 such that the 'insulation pad misalignment information' is transferred from the first laser profiling unit 206 to the first insulation pad alignment unit 208.

The first insulation pad alignment unit(s) 208 are further configured to lift each insulation pad 130 from the first moving conveyor 204, and then to place each insulation pad 130 onto the first vacuum conveyor belt 210. During the process of placing each insulation pad 130 onto the first vacuum conveyor belt 210, the first insulation pad alignment unit 208 is configured to use the 'insulation pad misalignment information' to recognise whether the lifted insulation pad 130 is misaligned, and to subsequently correct the alignment of the insulation pad 130 as it is placed onto the first vacuum conveyor belt 210. The 'correct alignment' of the insulation pads 130 is as described above: with the front edge 133 of each insulation pad 130 being substantially perpendicular to direction d; the two streams S1, S2 of insulation pads 130 being spaced apart from each other by spacing X1 in a direction perpendicular to direction d; and in each stream of insulation pads S1, S2, the insulation pads 130 are arranged linearly in series along direction d, and spaced apart lengthwise along direction d by spacing X2.

The first vacuum conveyor belt 210 applies a vacuum which suctions the insulation pads 130 to the first vacuum conveyor belt 210, such that the base face 132 of each insulation pad 130 is facing downwards and is in contact with the top surface of the first vacuum conveyor belt 210. The vacuum therefore holds each insulation pad 130 in position and in the 'correct alignment' while the insulation pad 130 is being advanced forward through the manufacturing process by the first vacuum conveyor belt 210.

A web of base film 214 is provided in the form of a roll at a base film input 216. The base film 214 comprises a first side and a second side, with the first side being covered in an adhesive layer. The web of base film 214 is unwound and fed into a first nip roller 212. At this stage, the web of base film 214 is oriented so that the first side (i.e., the side with the adhesive layer) is facing upwards, such that when the web of base film 214 is fed into the first nip roller 212, the second side of the web of base film 214 is in contact with the bottom roller of the first nip roller 212.

As the web of base film 214 is advanced through the manufacturing process, the two streams S1, S2 of insulation pads 130 are too advanced through the manufacturing process by the first vacuum conveyor belt 210 to the first nip roller 212. The insulation pads 130 are fed into the first nip roller 212 by the first vacuum conveyor belt 210 as the web of base film 214 is also fed into the first nip roller 212, such that the insulation pads 130 and the web of base film 214 pass through the first nip roller 212 simultaneously. Here, the insulation pads 130 are positioned above the web of base film 214. This means that the adhesive layer of the web of base film 214 is not exposed directly to the rollers of the first nip fed 212 and as such the adhesive will not permanently bond to the nip roller. The first nip roller 212 applies pressure to the insulation pads 130 and the web of base film 214 such that insulation pads 130 attach to the web of base film 214. More specifically, the base face 132 of each insulation pad 130 is attached to the first side of the web of base film 214 by the adhesive layer.

At this stage in the manufacturing process, the two series of insulation pads S1, S2 are attached, adjacent to each other, to the web of base film 214. The insulation pads 130 are positioned in the 'correct alignment', as described above.

After the insulation pads 130 have been attached to the web of base film 214 at the first nip roller 212, the web of base film 214 is advanced through the manufacturing process to a base film divider 218. The web of base film 214 may be advanced forwards by a conveyor belt, for example the first vacuum conveyor belt 210, or another nip roller. The base film divider 218 is configured to divide the web of base film 214 between the first series S1 of insulation pads 130 and the second series of insulation pads S2, i.e. through the middle of the web of base film 214 in direction d. This results in the formation of two discrete individual webs of base film, each with one series of insulation pads attached. More specifically, the first series S1 of insulation pads 130 is positioned down the middle of a first web of base film 220, attached by the adhesive layer. Similarly, the second series S2 of insulation pads 130 is positioned down the middle of a second web of base film 222, attached by the adhesive layer. The base film divider 218 may be any suitable mechanism which can divide the web of base film 214 in this manner, such as conventional mechanisms used for roll slitting, including razor blades, shear cut blades, circular crush cut blades, etc.

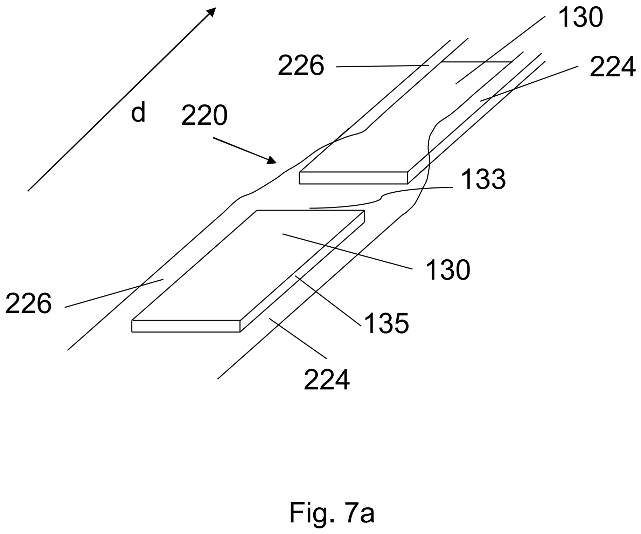

Figure 7a shows the folding and application process of the first base film strip 224 and the second base film strip 226 to each insulation pad 130 of the first series S1 of insulation pads 130, after the insulation pads 130 have been attached to the web of base film 214. Referring to Figure 7a, the first web of base film 220 has a width in a direction perpendicular to direction d which is greater than the width of an insulation pad 130, such that there is a strip of base film and exposed adhesive on either side of the insulation pad 130, i.e. a first base film strip 224 (also referred to as a left base film strip 224) and a second base film strip 226 (also referred to as a right base film strip 226). The left base film strip 224 and the right base film strip 226 each have a width in a direction perpendicular to direction d which is greater than the height of each of the left and right sides 135, 136 of an insulation pad 130. In this embodiment, the width of each of the left and right base film strips 224, 226 is approximately 10-15mm greater than the height of each of the left and right sides 135, 136. It shall also be appreciated that the second web of base film 222 and the second series S2 of insulation pads 130 is configured substantially identically to the first web of base film 220 and the first series S1 of insulation pads 130, also having a first base film strip (not shown) and a second base film strip (not shown) exposed.

After the web of base film 214 has been divided at the base film divider 218, the first and second webs of base film 220, 222 are each advanced through the manufacturing process to a base film folding mechanism 228. The first and second webs of base film 220, 222 may be advanced forwards by a conveyor belt, for example the first vacuum conveyor belt 210, or another nip roller which pulls the material through.

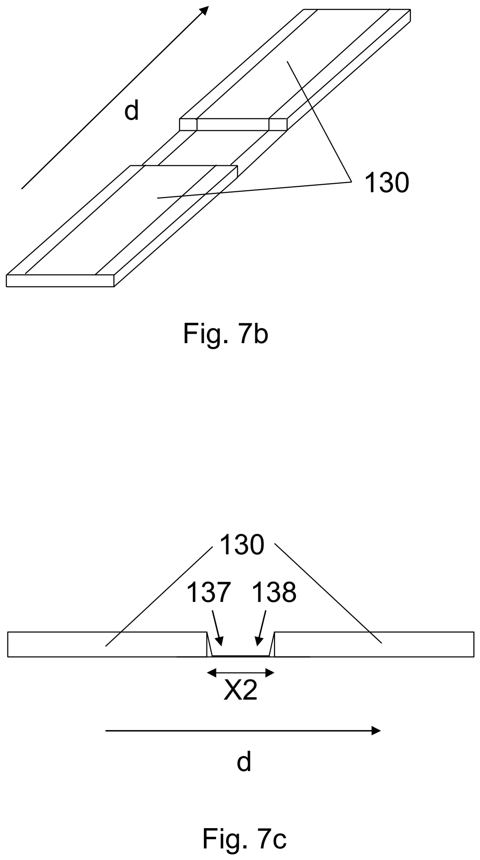

With reference to Figures 7a and 7b, the following section describes the first web of base film 220 and a single insulation pad 130 of the first series S1 of insulation pads 130. As the manufacturing process is a continuous process, it will be appreciated that the folding process happens continuously and so the first web of base film 220 is folded by the base film folding mechanism 228 in a continuous manner over consecutive insulation pads 130 of the first series S1 of insulation pads 130. It shall also be appreciated that the second web of base film 222 and the second series S2 of insulation pads 130 is configured substantially identically to the first web of base film 220 and the first series S1 of insulation pads 130. As such, the following description may also apply to the second web of base film 222 and the second series S2 of insulation pads 130.

The base film folding mechanism 228 is configured to fold the left and right base film strips 224, 226 of the first web of base film 220 over the first series S1 of insulation pads 130. For this purpose, the base film folding mechanism 228 may have a folding plow, i.e. a stationary metal plow. The base film folding mechanism 228 may have two folding plows, i.e. a folding plow for each of the first and second webs of base film 220, 222. Each folding plow may be helically shaped (i.e., it may be a helix formed folding plow) or otherwise configured to allow the first and second webs of base film 220, 222 to be folded in the following way.

As the first web of base film 220 passes through the base film folding mechanism 228, the left base film strip 224 is folded over the insulation pad 130 so that the adhesive covered first side of the left base film strip 224 contacts the left side 135 of the insulation pad 130 and a portion of the top face 131 of the insulation pad 130, and is secured in place by the adhesive layer. Pressure applied by the base film folding mechanism 228 helps to bond the insulation pad 130 and left base film strip 224 in this way. In this embodiment, the left base film strip 224 now extends over the top face 131 of the insulation pad 130 between the front and back edges 133, 134 by approximately 15mm. Similarly, as the first web of base film 220 passes through the base film folding mechanism 228, the right base film strip 226 is folded over the insulation pad 130 so that the adhesive covered first side of the right base film strip 226 contacts the right side 136 of the insulation pad 130 and a portion of the top face 131 of the insulation pad 130, and is secured in place by the adhesive layer. Pressure applied by the base film folding mechanism 228 helps to bond the insulation pad 130 and right base film strip 226 in this way. In this embodiment, the right base film strip 226 now extends over the top face 131 of the insulation pad 130 between the front and back edges 133, 134 by approximately 15mm. Figure 7a shows two consecutive insulation pads 130 in the first series S1, one insulation pad 130 having had the first web of base film 220 folded over in the manner described above, and the other insulation pad 130 not yet.

A first web of lidding film 230 and a second web of lidding film 232 is provided in the form of a roll at a lidding film input 234. Each web of lidding film 230, 232 comprises a first side and a second side, with the first side being covered in an adhesive layer. Each web of lidding film 230, 232 is unwound and fed into a lidding film applicator 236. At this stage, each web of lidding film 230, 232 is oriented so that the first side (i.e., the side with the adhesive layer) is facing downwards. There may alternatively be two lidding film applicators 236, one lidding film applicator 236 which applies the first web of lidding film 230 to the first stream S1 of insulation pads 130, and another lidding film applicator 236 which applies the second web of lidding film 232 to the second stream S2 of insulation pads 130.

In this example, the lidding film applicator 236 is a nip roller with pressure control, which is configured to maintain a substantially constant pressure between the two rollers. In other words, the lidding film applicator 236 is configured to measure the pressure between the two rollers and adjust the distance between the two rollers accordingly to maintain this substantially constant pressure, as will be explained below.

With reference to Figures 7a, 7b, and 7c, the following section describes the first web of lidding film 230 and a single insulation pad 130 of the first series S1 of insulation pads 130. As the manufacturing process is a continuous process, it will be appreciated that the application process happens continuously and so the first web of lidding film 230 is applied by the lidding film applicator 236 in a continuous manner over consecutive insulation pads 130 of the first series S1 of insulation pads 130. It shall also be appreciated that the second web of lidding film 232 and the second series S2 of insulation pads 130 is configured substantially identically to the first web of lidding film 230 and the first series S1 of insulation pads 130. As such, the following description may also apply to the second web of lidding film 232 and the second series S2 of insulation pads 130.

After the first web of base film 220 and first series S1 of insulation pads 130 pass through the base film folding mechanism 228, the first web of base film 220 and first series S1 of insulation pads 130 are advanced through the manufacturing process to the lidding film applicator 236. The nip pressure applied by the lidding film applicator 236 in this example is sufficient to pull the first web of base film 220 and first series of insulation pads S1 through this portion of the manufacturing process. The first web of base film 220 and first series S1 of insulation pads 130 are fed into the lidding film applicator 236 at the same time as the first web of lidding film 230 is also fed into the lidding film applicator 236, such that the first web of base film 220 and first series S1 of insulation pads 130, and the first web of lidding film 230 pass through the lidding film applicator 236 simultaneously.

The lidding film applicator 236 is configured to align the first web of lidding film 230 with the first web of base film 220 and the insulation pad 130, and applies pressure such that the first web of lidding film 230 attaches to the insulation pads 130. More specifically, the first (adhesive covered) side of the first web of lidding film 230 attaches to at least a portion of: the first face 131 of the insulation pad 130, the left base film strip 224, and the right base film strip 226. The first side of the first web of lidding film 230 also attaches to at least a portion of the front edge 133 and at least a portion of the back edge 134 of the insulation pad 130.

The first web of lidding film 230 has a width in a direction perpendicular to direction d which is less than the width of an insulation pad 130, but wide enough such that when the first web of lidding film 230 is attached to the insulation pads 130, the first web of lidding film 230 overlaps with the left base film strip 224 and the right base film strip 226. The adhesive first side of the first web of lidding film 230 also attaches to a portion of each of the left base film strip 224 and the right base film strip 226, i.e. to the second side of the first web of base film 220. In this embodiment, the first web of lidding film 230 is approximately 10mm less wide than an insulation pad 130 such that the first web of lidding film 230 overlaps with each of the left base film strip 224 and the right base film strip 226 by approximately 5-10mm.

Importantly, the lidding film applicator 236 is also configured to apply pressure to the first web of lidding film 230 in the area between consecutive insulation pads 130 in the first stream S1 of insulation pads 130, such that the adhesive covered first side of the first web of lidding film 230 attaches to the adhesive covered first side of the first web of base film 220, as shown in Figure 7c, creating a seal between each consecutive insulation pad 130. A strong adhesive to adhesive bond works to provide an effective seal between consecutive insulation pads 130. In this example, as mentioned above, the lidding film applicator 236 is configured to maintain a substantially constant pressure between the two rollers. As the first web of base film 220 and first series S1 of insulation pads 130 passes between the rollers of the lidding film applicator 236, the lidding film applicator 236 reduces the distance between the rollers when there is no insulation pad 130 between the rollers. The rollers can then apply pressure to the first web of base film 220 and the first web of lidding film 230 in the area between consecutive insulation pads 130 and create the abovementioned seal. The lidding film applicator 236 then increases the distance between the rollers when there is an insulation pad 130 between the rollers. The rollers can then apply pressure to the first web of base film 220, the first web of lidding film 230, and the insulation pad 130 such that first web of lidding film 230 attaches to the insulation pad 130, as explained above.

The creation of this seal between consecutive insulation pads 130 is important in that it allows each insulation pad 130 to be fully sealed, or 'encapsulated', by the base and lidding films. This prevents aerogel or other fibres from the insulation pad 130 from escaping into a battery pack once the encapsulated insulation pad is installed between adjacent battery cells. In the instance of each insulation pad 130 being formed from an aerogel material, there may be a puff of aerogel dust which is given off by the insulation pad 130 as it is placed onto the base film. This aerogel dust may settle on the adhesive layer on the base film and subsequently could affect the strength of the adhesive to adhesive bond of the base film to lidding film. The above described application of a lidding film (as a separate film to the base film) allows for the lidding film to be applied to the insulation pads 130 at a very low tension. In addition, the lidding film applicator 236 is configured to take more of the first and second webs of lidding film 230, 232 when required such that the rate of application of the first and second webs of lidding film 230, 232 substantially matches the rate of folding of the first and second webs of base film 220, 222. As such, the lidding film applicator 236 may increase or reduce speed of application based on the requirement for lidding film, in order to apply the lidding film under controlled tension.

Therefore, when the lidding film is attached to the base film between consecutive insulation pads 130 by the lidding film applicator 236, it is also done so under a very low tension, enabling a relatively flat and non-tensioned seal as shown in Figure 7c.

At this point in the manufacturing process, each stream S1, S2 of insulation pads 130 is now 'fully encapsulated' by its respective web of base and lidding films. Each stream S1, S2 of insulation pads and its respective web of base and lidding films is now hereafter referred to as a 'linked series of ATP cell spacers', i.e. a first and second 'linked series of ATP cell spacers'. Each linked series of ATP cell spacers 100 therefore comprises a series of ATP cell spacers which are joined by a continuous web of base film and a continuous web of lidding film. One such linked series of ATP cell spacers 100 is shown in Figure 7b.

Each of the first and second linked series of ATP cell spacers 100 is then advanced through the manufacturing process to a laminating roller (not shown) which laminates the respective webs of base and lidding films 220, 230 around the contours of each insulation pad 130. This lamination process nips the base and lidding films 220, 230 together, closer to the edge of the insulation pad 130, which in turn allows for a more snug wrapping of the base and lidding films 220, 230 to the pad, which minimises the impact of introducing the films 220, 230 to the size and shape of the overall ATP cell spacer 100. This is important in mitigating any effect that the base and lidding films 220, 230 may have in affecting the "fit" of each ATP cell spacer 100 when it is assembled into a battery system. This lamination process also minimises air pockets which may be present between each insulation pad 130 and its respective webs of base and lidding films, which facilitates the creation of the relatively flat and non-tensioned seal described above, by maximising the area of contact between the base and lidding films 220, 230.

Each of the first and second linked series of ATP cell spacers 100 is then advanced through the manufacturing process to a rotary die cutter 238. The following section describes the first linked series of ATP cell spacers 100 (i.e., comprising the first series S1 of insulation pads 130, the first web of base film 220, and the first web of lidding film 230), but may also apply to the second linked series of ATP cell spacers. The rotary die cutter 238 may alternatively be two separate rotary die cutters, one for each linked series of ATP cell spacers.

The rotary die cutter 238 is configured to cut vertically through the first web of base film 220 and the first web of lidding film 230 between at a point substantially equidistant between consecutive insulation pads 130. This separates the individual ATP cell spacers 100, an example of which is shown in Figure 1. The ATP cell spacers 100 are at this point still arranged in a first and second stream S1, S2. The rotary die cutter 238 may alternatively be a laser cutting device or a plate cutter. At this point, each individual ATP cell spacer 100 has a front film flap 137 and a back film flap 138, comprised of the portions of the first web of base film 220 and first web of lidding film 230 to the front and back of the insulation pad 130. The front film flap 137 and back film flap 138 are shown on Figure 1, in their final folded configuration as will be explained below.

The rotary die cutter 238 may also be configured to trim the corners of the front film flap 137 and back film flap 138 in order to minimise bulk of material in the finished ATP cell spacer 100. The waste produced by trimming the corners of the front and back film flaps 137, 138 may be removed from the ATP cell spacer 100 by any appropriate mechanism.

Each of the first and second streams S1, S2 of ATP cell spacers 100 is then optionally advanced through the manufacturing process to an inkjet 240 which prints the top face of each individual ATP cell spacer 100 pad with information. This information can relate to the part number, date and/or time of manufacture, batch number, or other relevant information.

Each of the first and second streams S1, S2 of ATP cell spacers 100 are then advanced through the manufacturing process to a second laser profiling unit 242. The second laser profiling unit 242 may comprise a conventional 2D or a 3D laser profile scanner, which is configured to detect each ATP cell spacer 100, measure the dimensions of each ATP cell spacer 100, and determine the position of the ATP cell spacer 100, including the position of the ATP cell spacer 100 relative to direction d. Importantly, the second laser profiling unit 242 is configured to detect whether any 'defects' are present in each ATP cell spacer 100. Such defects may include unwanted gaps or delamination between any of the web of base film 220, the web of lidding film 230, and/or the insulation pad 130, which may create 'micro-tunnels' for aerogel to escape the ATP cell spacer 100. ATP cell spacers 100 which are identified as having defects may be removed from the manufacturing process by any suitable mechanism.

Similarly to the first laser profiling unit 206, the second laser profiling unit 242 may comprise two laser profile scanners, with one scanner configured to monitor the first stream S1 of ATP cell spacers 100, and a second scanner configured to monitor the second stream S2 of ATP cell spacers 100.

Each of the first and second streams S1, S2 of ATP cell spacers 100 are then advanced through the manufacturing process to a second insulation pad alignment unit 244. The second insulation pad alignment unit 244 may comprise a conventional pick and place mechanism, such as a robotic arm or a cartesian robot, and is configured to pick up each ATP cell spacer 100 and rotate them by 90 degrees before placing each ATP cell spacer 100 onto a flighted or vacuum conveyor 246. This rotation of each ATP cell spacer 100 aids in folding the front film flap 137 and back film flap 138, as will be explained below. At this point, each ATP cell spacer 100 is now oriented such that they are travelling through the manufacturing process widthways in relation to direction d, for example with either the first and second sides 135, 136 of the insulation pad 130 being arranged perpendicular to direction d.

The second insulation pad alignment unit 244 may have two pick and place mechanisms, with one pick and place mechanism configured to rotate each ATP cell spacer 100 of the first stream S1, and another pick and place mechanism configured to rotate each ATP cell spacer 100 of the second stream S2. Alternatively, the second insulation pad alignment unit 244 may have four pick and place mechanisms, with two pick and place mechanisms configured to rotate the ATP cell spacers 100 of the first stream S1, and another two pick and place mechanisms configured to rotate the ATP cell spacers 100 of the second stream S2. Alternatively, there may just be a single pick and place mechanism that is configured to rotate each ATP cell spacer 100 of both streams S1, S2. Any other suitable alternative mechanism which can rotate each ATP cell spacer 100 may be used. Likewise, the flight conveyor 246 may actually be two separate flight conveyors, with one flight conveyor configured to convey ATP cell spacers 100 of the first stream S1, and another flight conveyor configured to convey ATP cell spacers 100 of the second stream S2. Alternatively, there may just be a single flight conveyor that is configured to convey the ATP cell spacers 100 of both streams S1, S2.

Each of the first and second streams S1, S2 of ATP cell spacers 100 are then advanced through the manufacturing process by the flight conveyor 246 to a flap folding mechanism 248. The flap folding mechanism 248 is configured to apply an adhesive, for example a glue, to the top of each of the front film flap 137 and the back film flap 138 of each ATP cell spacer 100. The flap folding mechanism 248 is also configured to then, after adhesive is applied to the front and back film flaps 137, 138, fold the front and back film flaps 137, 138 over the side and at least a portion of the top of each ATP cell spacer 100, and apply pressure to affix the front and back film flaps 137, 138, resulting in the configuration shown in Figure 1.

For this purpose, the flap folding mechanism 248 may have an adhesive applicator which is configured to apply the adhesive in the manner described above. The flap folding mechanism may have two separate adhesive applicators, with one adhesive applicator configured to apply adhesive to ATP cell spacers 100 of the first stream S1, and another adhesive applicator configured to apply adhesive ATP cell spacers 100 of the second stream S2.

The flap folding mechanism 248 may also have a folding plow, i.e. a stationary metal plow. The flap folding mechanism 248 may have two folding plows, i.e. a folding plow for each of the first and second streams S1, S2 of ATP cell spacers 100. Each folding plow may be helically shaped or otherwise configured to allow the front and back film flaps 137, 138 of each ATP cell spacer 100 to be folded in a way which results in the configuration shown in Figure 1.

Each of the first and second streams S1, S2 of ATP cell spacers 100 are then advanced through the manufacturing process to a top adhesive patch applicator 250. The top adhesive patch applicator 250 is configured to apply a pre-cut adhesive patch 110 to the top of each ATP cell spacer 100. The ATP cell spacers 100 may at this point be transferred from the flight conveyor 246 onto a second vacuum conveyor belt 252, which is configured to apply a vacuum to the bottom of each ATP cell spacer 100 while the top adhesive patches 250 are being applied. There may be two individual second vacuum conveyor belts 252, one second vacuum conveyor belt 252 for the first stream S1, and another second vacuum conveyor belt 252 for the second stream S2.

Each top adhesive patch 110 may be made of double-sided tape, and so each of a first and second side of each top adhesive patch 110 may be coated in an adhesive layer. The first side of each top adhesive patch 110 is attached to the top of each ATP cell spacer 100 by the top adhesive patch applicator 250. A liner, for example comprising polyethylene terephthalate, may be removably attached to the second side of each top adhesive patch 110 in order to protect the adhesive layer on the second side of each top adhesive patch 110. As seen in Figure 1, the top adhesive patch 110 is smaller than the top face of the ATP cell spacer, and as such it only covers a portion of the top face of the ATP cell spacer.

The top adhesive patch applicator 250 may actually be two separate top adhesive patch applicators 250, with one top adhesive patch applicator configured to apply top adhesive patches to ATP cell spacers 100 of the first stream S1, and another top adhesive patch applicator configured to apply top adhesive patches to ATP cell spacers 100 of the second stream S2. Alternatively, there may just be one top adhesive patch applicator 250 that is configured to apply top adhesive patches to the ATP cell spacers 100 of both streams S1, S2.

Each of the first and second streams S1, S2 of ATP cell spacers 100 are then advanced through the manufacturing process by the second vacuum conveyor belt 252 to a first cleaning mechanism 254. The first cleaning mechanism 252 is configured to clean the surfaces of each ATP cell spacer 100, for example using ionised air and carbon brushes. There may be separate cleaning mechanisms 254 for each of the first stream S1 and the second stream S2 of ATP cell spacers 100.

Each of the first and second streams S1, S2 of ATP cell spacers 100 are then transferred from the second vacuum conveyor belt 252 to a third vacuum conveyor belt 256, which is configured to apply a vacuum to the top of each ATP cell spacer 100, such that the ATP cell spacers 100 are positioned under the third vacuum conveyor belt 256. The third vacuum conveyor belt advances the ATP cell spacers 100 towards a bottom adhesive patch applicator 258. The bottom adhesive patch applicator 258 is configured to apply a pre-cut adhesive patch 150 to the top of each ATP cell spacer 100. There may be two individual third vacuum conveyor belts 256, one third vacuum conveyor belt 256 for the first stream S1, and another third vacuum conveyor belt 256 for the second stream S2.

Each bottom adhesive patch 150 may be made of double-sided tape, and so each of a first and second side of each bottom adhesive patch 150 may be coated in an adhesive layer. The first side of each bottom adhesive patch 150 is attached to the bottom of each ATP cell spacer 100 by the bottom adhesive patch applicator 258. A liner, for example comprising polyethylene terephthalate, may be removably attached to the second side of each bottom adhesive patch 150 in order to protect the adhesive layer on the second side of each bottom adhesive patch 150. As seen in Figure 2, the bottom adhesive patch 150 is smaller than the bottom face of the ATP cell spacer, and as such it only covers a portion of the bottom face of the ATP cell spacer.

The bottom adhesive patch applicator 258 may actually be two separate bottom adhesive patch applicators 258, with one bottom adhesive patch applicator configured to apply bottom adhesive patches to ATP cell spacers 100 of the first stream S1, and another bottom adhesive patch applicator configured to apply bottom adhesive patches to ATP cell spacers 100 of the second stream S2. Alternatively, there may just be one bottom adhesive patch applicator 258 that is configured to apply bottom adhesive patches to the ATP cell spacers 100 of both streams S1, S2.

Each ATP cell spacer 100 is then advanced through the manufacturing process by the third vacuum conveyor belt 256 to a second cleaning mechanism 260. The second cleaning mechanism 260 is configured to clean the surfaces of each ATP cell spacer 100, for example using ionised air and carbon brushes. There may be separate cleaning mechanisms 260 for each of the first stream S1 and the second stream S2 of ATP cell spacers 100.

Each ATP cell spacer 100 is then transferred from the third vacuum conveyor belt 256 to an exit conveyor belt 262, which conveys the ATP cell spacers 100 out of the manufacturing process, for example into a mobile container truck. There may be two individual exit conveyor belts 262, one exit conveyor belt 262 for the first stream S1, and another exit conveyor belt 262 for the second stream S2.

It will be appreciated that various changes and modifications can be made to the present invention without departing from the scope of the present application. For example, instead of there being two adjacent parallel streams of insulation pads 130 (i.e., a first stream S1 of insulation pads 130 and a second stream S2 of insulation pads 130), there may be only a single stream of insulation pads S1. Alternatively, there may be more than two adjacent parallel streams of insulation pads 130.

## Claims

1. A method of making a plurality of anti-thermal propagation cell spacers (100) for use in a multi-cell battery pack, the method comprising:
providing a web of base film (214) extending in a longitudinal direction (d), the web of base film (214) comprising a first side and a second side, wherein the first side is covered with an adhesive layer;
providing a first plurality of insulation pads (S1) comprising a top face (131), a base face (132), a front edge (133), a back edge (134), a left side (135), and a right side (136);
attaching the base face (132) of an insulation pad (130) of the first plurality of insulation pads (S1) to the first side of the web of base film (214), such that a left base film strip (224) and a right base film strip (226) of the web of base film (214) remain unattached to the insulation pad (130);
folding the left base film strip (224) over the left side (135) and at least a portion of the top face (131), and folding the right base film strip (226) over the right side (136) and at least a portion of the top face (131) of an insulation pad (130) of the first plurality of insulation pads (S1);
providing a first web of lidding film (230) extending in the longitudinal direction (d), the first web of lidding film (230) comprising a first side and a second side, wherein the first side is covered with an adhesive layer; and
attaching the first side of the first web of lidding film (230) to at least a portion of the top face (131) of an insulation pad (130) of the first plurality of insulation pads (S1), wherein the first side of the first web of lidding film (230) is also attached to at least a portion of the left base film strip (224) and of the right base film strip (226).

2. A method as claimed in claim 1, wherein the insulation pads (130) of the first plurality of insulation pads (S1) are attached to the web of base film (214) in series, such that consecutive insulation pads (130) are spaced apart along longitudinal direction (d) by a longitudinal spacing (X2).

3. A method as claimed in claim 2, wherein the method further comprises:
attaching the first side of the first web of lidding film (230) to the first side of the web of base film (220) between consecutive insulation pads (130) of the first plurality of insulation pads (S1).

4. A method as claimed in any preceding claim, wherein the method further comprises:
attaching the first side of the first web of lidding film (230) to at least a portion of the front edge (133) and at least a portion of the back edge (124) of the insulation pad (130).

5. A method as claimed in any preceding claim, wherein a left and right folding plow (228) respectively fold the left base film strip (224) and the right base film strip (226) over the insulation pad (130).

6. A method as claimed in any preceding claim, wherein the method further comprises:
cutting vertically through the web of base film (220) and the first web of lidding film (230) at a point substantially equidistant between consecutive insulation pads (130) of the first plurality of insulation pads (S1) to define a front film flap (137) and a back film flap (138).

7. A method as claimed in claim 6, wherein the method further comprises:
folding the front film flap (137) over the front edge (133) and at least a portion of the top face (131) of the insulation pad (130), and folding the back film flap (138) over the back edge (134) and at least a portion of the top face (131) of the insulation pad (130).

8. A method as claimed in any preceding claim, wherein the method further comprises:
adjusting the alignment of the insulation pad (130) prior to attaching the base face (132) of the insulation pad (130) to the first side of the web of base film (214).

9. A method as claimed in claim 8 when dependent on at least claim 2, wherein adjusting the alignment of the insulation pad (130) comprises moving the insulation pad (130) such that:
the front edge (133) of the insulation pad (130) is substantially perpendicular to the longitudinal direction (d); and
the longitudinal spacing (X2) between the two consecutive insulation pads (130) is substantially consistent, preferably with a variance of less than 1mm.

10. A method as claimed in claim 9, wherein the method further comprises:
determining, for the insulation pads (130), insulation pad misalignment information comprising information regarding angular misalignment, parallel misalignment, and/or serial misalignment of the insulation pads (130).

11. A method as claimed in any preceding claim, wherein the method further comprises:
providing a second plurality of insulation pads (S2) comprising a top face (131), a base face (132), a front edge (133), a back edge (134), a left side (135), and a right side (136); and
attaching the base face (132) of an insulation pad (130) of the second plurality (S2) of insulation pads (130) to the first side of the web of base film (214), such that a left base film strip (224) and a right base film strip (226) of the web of base film (214) remains unattached to the insulation pad (130);
wherein the insulation pads (130) in the first plurality (S1) are spaced apart from the insulation pads (130) in the second plurality (S2) by a latitudinal spacing (X1), wherein the latitudinal spacing (X1) is perpendicular to the longitudinal direction (d).

12. A method as claimed in claim 11, wherein the method further comprises:
dividing the web of base film (214) in the longitudinal direction (d) between the insulation pad (130) of the first plurality (S1) of insulation pads (130) and insulation pad (130) of the second plurality of insulation pads (S2);
folding the left base film strip (224) over the left side (135) and at least a portion of the top face (131) of the insulation pad (130) of the first plurality of insulation pads (S1), and folding the right base film strip (226) over the right side (136) and at least a portion of the top face (131) of the insulation pad (130) of the second plurality of insulation pads (S2);
providing a second web of lidding film (232) extending in the longitudinal direction (d), the second web of lidding film (232) comprising a first side and a second side, wherein the first side is covered with an adhesive layer;
attaching the first side of the second web of lidding film (230) to at least a portion of the top face (131) of the insulation pad (130) of the second plurality of insulation pads (S2), wherein the first side of the second web of lidding film (232) is also attached to at least a portion of the left base film strip (224) and of the right base film strip (226) of the insulation pad (130) of the second plurality of insulation pads (S2).

13. An anti-thermal propagation cell spacer (100) as produced according to any of claims 1 to 12.
